# EUROPÄISCHE PATENTANMELDUNG

(11) **EP 4 707 552 A1**
(43) Veröffentlichungstag der Anmeldung: **11.03.2026**
(21) Anmeldenummer: 25192771.1
(22) Anmeldetag: 30.07.2025
(51) Int. Cl.: F01M 1/02, F01M 1/10, F16N 7/38, F03D 80/70, F01M 1/12

(54) **SYSTEM ZUR FLUIDVERSORGUNG**

(30) Priorität: 29.08.2024 DE 102024002795
(71) Anmelder: Hydac Filtertechnik GmbH, 66280 Sulzbach/Saar (DE)
(72) Erfinder: Schmidt, Armin, 66557 Illingen (DE)
(74) Vertreter: Bartels und Partner, Patentanwälte

(57) **Zusammenfassung**

2. System zur Fluidversorgung mindestens eines Verbrauchers (V), insbesondere zur Schmiermittelversorgung von Verbrauchern (V), wie Lagerstellen in Getrieben von Windkraftanlagen einschließlich Gleitlagern, zumindest bestehend aus einer
- Fördereinrichtung (14),
- Filtereinrichtung (16), und
- Wärmetauscheinrichtung (18),
die über fluidführende Leitungen (20, 22) miteinander verbunden und im Rahmen einer Fluidführung (24) entlang einer Strömungsrichtung mit Fluid durchströmbar sind, dadurch gekennzeichnet, dass zwischen der Fördereinrichtung (14) und dem jeweiligen Verbraucher (V) im Hauptstrom (40) einer Fluidführung (24) eine Hauptfilterstufe (42) der Filtereinrichtung (16) geschaltet ist, dass zur Steuerung eines Nebenstroms (44) der Fluidführung (24) mindestens eine Ventileinrichtung (46) vorgesehen ist, und dass mit ansteigendem Differenzdruck betreffend die Hauptfilterstufe (42) die jeweilige Ventileinrichtung (46) betätigt, eine vorgebbare Teilmenge des Fluids aus der Fluidführung (24) zum Verbraucher (V) entfernt.

## Beschreibung

Die Erfindung betrifft ein System zur Fluidversorgung mindestens eines Verbrauchers, insbesondere zur Schmiermittelversorgung von Verbrauchern, wie Lagerstellen in Getrieben von Windkraftanlagen einschließlich Gleitlagern, zumindest bestehend aus einer
- Fördereinrichtung,
- Filtereinrichtung, und
- Wärmetauscheinrichtung,
die über fluidführende Leitungen miteinander verbunden und im Rahmen einer Fluidführung entlang einer Strömungsrichtung mit Fluid durchströmbar sind.

Durch DE 10 2009 018 969 A1 ist eine Schmierstoff-Fördereinrichtung bekannt, insbesondere für einen Verbraucher einer Windenergieanlage, vorzugsweise für ein Getriebe einer Windenergieanlage, mit zumindest einer Filter-Pumpeneinheit, bestehend aus einer Schmiermittel-Pumpe, einem Antriebsmotor für die Schmiermittel-Pumpe, und einer Filtervorrichtung für das Schmiermittel, wobei die Schmiermittel-Pumpe in einem Schmiermittelbehälter angeordnet ist und wobei eine Schmiermittelabströmleitung in dem Schmiermittelbehälter von der Schmiermittel-Pumpe weggeführt und durch eine Wand des Schmiermittelbehälters zu dem Verbraucher und/oder zu der Filtervorrichtung geführt ist.

Dergestalt sind mögliche Leckagestellen innerhalb der Schmiermittel-Fördereinrichtung derart angeordnet, dass möglicherweise austretendes Schmiermittel direkt dem Schmierstoffvorrat in dem Schmiermittelbehälter wieder zugeführt ist und es insoweit zu keinerlei Verschmutzungen kommen kann.

Durch DE 10 2011 008 672 A1 ist eine Vorrichtung zum Schmieren eines Getriebes sowie eines Lagers, insbesondere in Form eines Rotorlagers, bei einer Windkraftanlage bekannt, wobei dem Getriebe und dem Lager jeweils mindestens ein Schmierkreislauf der Vorrichtung zugeordnet ist, in dem im Betrieb der Vorrichtung jeweils ein Schmiermedium strömt, wobei die Vorrichtung ferner eine Wärmetauscheinrichtung für einen Wärmetransport zwischen dem Schmierkreislauf des Getriebes und dem Schmierkreislauf des Lagers aufweist und wobei die Wärmetauscheinrichtung im Betrieb der Vorrichtung eine Differenz zwischen der Temperatur des Schmiermediums in dem Schmierkreislauf des Getriebes und der Temperatur des Schmiermediums in dem Schmierkreislauf des Lagers durch Wärmeanpassung zumindest teilweise ausgleicht.

Dergestalt kann im Betrieb der Vorrichtung Wärme von dem, dem Getriebe zugeordneten Schmierkreislauf zu dem, dem Rotorlager zugeordneten Schmierkreislauf übertragen werden. Insoweit nimmt das Schmiermedium des Schmierkreislaufes des Rotorlagers auch bei niedrigen Umgebungstemperaturen einen für die Schmierung günstigeren, insbesondere höheren Temperaturwert an. Gleichzeitig ist erreicht, dass durch die Abfuhr von Wärme von dem Schmiermedium des Schmierkreislaufs des Getriebes das dortige Schmiermedium in einem schmiertechnisch günstigen, insbesondere nicht zu hohen, Temperaturbereich betrieben ist.

Ausgehend von diesem Stand der Technik liegt der Erfindung die Aufgabe zugrunde, unter Beibehalten der Vorteile der bekannten Lösungen diese dahingehend weiter zu verbessern, dass ein unzulässig hoher Druckaufbau im System vermieden ist.

Eine dahingehende Aufgabe löst ein System mit den Merkmalen des Patentanspruches 1 in seiner Gesamtheit.

Dadurch, dass gemäß dem kennzeichnenden Teil des Patentanspruches 1 zwischen der Fördereinrichtung und dem jeweiligen Verbraucher im Hauptstrom einer Fluidführung eine Hauptfilterstufe der Filtereinrichtung geschaltet ist, dass zur Steuerung eines Nebenstroms der Fluidführung mindestens eine Ventileinrichtung vorgesehen ist, und dass mit ansteigendem Differenzdruck betreffend die Hauptfilterstufe die jeweilige Ventileinrichtung betätigt, eine vorgebbare Teilmenge des Fluids aus der Fluidführung zum Verbraucher entfernt, kann ein unzulässig hoher Differenzdruck in bzw. an der Hauptfilterstufe vermieden werden. Hierfür wird stufenlos oder in mehreren Stufen mittels der jeweiligen Ventileinrichtung eine definierte Fluid-Teilmenge, unter Umgehen des Verbrauchers, direkt in einen Fluid-Vorratstank oder in einen Ölsumpf eines Getriebegehäuses zurückgefördert. Dies entlastet die Hauptfilterstufe und ermöglicht insoweit kompakte Filterbaugrößen. Der für die Kühlung benötigte Volumenstrom ist grundsätzlich größer als der für die Schmierung benötigte, so dass es daher ermöglicht ist, eine Teilmenge des Gesamtvolumenstroms bzw. Kühlvolumenstroms abzuzweigen und an der Hauptfilterstufe vorbei im Nebenstrom in den Vorratstank respektive in den Ölsumpf abzuführen, was wiederum das System als Ganzes entlastet.

Bei einer bevorzugten Ausführungsform des erfindungsgemäßen Systems ist vorgesehen, dass die Ventileinrichtung mindestens
- ein Stetigventil,
- ein Umschaltventil,
- ein Drosselventil, oder
- eine Ventilbaugruppe mit mindestens zwei Schaltventilen und zwei Drosselventilen
aufweist. Mittels des Stetigventils lässt sich stufenlos zur Reduzierung des Differenzdruckes betreffend die Hauptfilterstufe eine definierte Teilmenge zurückführen oder in mehreren Stufen unter Einsatz von mehreren Drosselventilen.

Unter Einsatz einer geeigneten Sensorik die insbesondere Differenzdruckmessungen an der Hauptfilterstufe vornehmen kann, lässt sich auch ein Umschaltventil, beispielsweise ein 3/2-Wege-Umschaltventil, verwenden, das gezielt betätigt die Teilmengenrückführung von Fluid veranlasst.

Durch die Ventilbaugruppe mit mindestens zwei Schaltventilen und zwei Drosselventilen lässt sich die hierdurch gebildete, jeweilige Drosselstelle mittels des zugehörigen Schaltventils, insbesondere in Form eines 2/2-Wegeventiles, aktivieren und es kann dergestalt eine feingestufte Rückführung für die angesprochene Teilmenge in der Art einer Portionierung erfolgen.

Bei einer alternativen Ausgestaltung des erfindungsgemäßen Systems ist vorgesehen, dass zwischen einer Vorfilterstufe und der Hauptfilterstufe die Wärmetauscheinrichtung geschaltet ist. Dergestalt ist der Hauptschmierungsfilter nach dem Kühler der Wärmetauscheinrichtung vorgesehen und ein zusätzlicher Grobfilter als Vorfilter ist vor dem Kühler angeordnet, um dahingehend den Kühler vor größeren Partikelverschmutzungen zu schützen. Die dahingehende Anordnung ist gleichfalls dazu geeignet, insoweit die Hauptfilterstufe vor unzulässig hohen Differenzdrücken durch Verschmutzung zu schützen und insbesondere die Möglichkeit zu eröffnen, den Differenzdruck in der Hauptfilterstufe überhaupt zu reduzieren. Weitere vorteilhafte Ausführungsformen des erfindungsgemäßen Systems sind Gegenstand der Unteransprüche.

Im Folgenden wird das erfindungsgemäße System anhand von Ausführungsbeispielen nach der Zeichnung näher erläutert. Dabei zeigen in prinzipieller und nicht maßstäblicher Darstellung, jeweils in der Art eines hydraulischen Schaltplans, die
- Figur 1: eine erste Ausführungsform des erfindungsgemäßen Systems;
- Figur 2: eine zweite Ausführungsform des erfindungsgemäßen Systems; und
- Figur 3: einen geänderten Ventilaufbau, wie er insbesondere für die Systemlösung nach der Figur 2 zum Einsatz kommen kann.

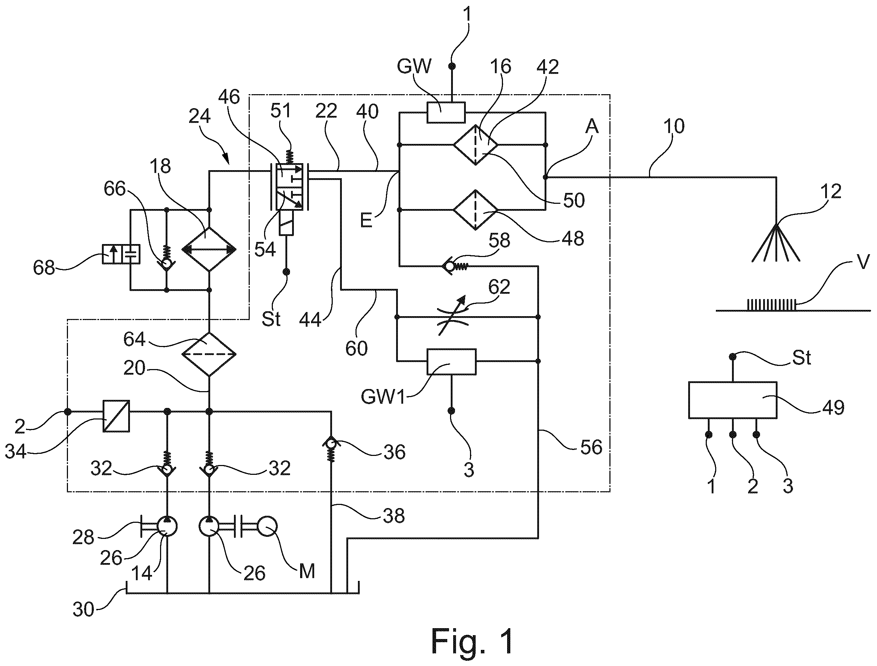

Figur 1 zeigt exemplarisch das erfindungsgemäße System zur Fluidversorgung mindestens eines Verbrauchers V, insbesondere vorgesehen zur Schmiermittelversorgung von Verbrauchern V, wie Lagerstellen in Getrieben von Windkraftanlagen einschließlich Gleitlagern. Da der dahingehende Aufbau von Getrieben mit ihren Lagerstellen im Stand der Technik hinreichend bekannt ist, wird auf deren nähere Darstellung verzichtet und ausgangsseitig nur eine Fluidleitung 10 gezeigt, die zu dem jeweiligen Verbraucher V führt und die an ihrem freien Ende für einen Sprühauftrag von Schmiermittel mit einer geeigneten Sprühdüse 12 versehen ist. Die Sprühdüse 12 steht exemplarisch für eine Aufteilung und Zuleitung zu mehreren Schnittstellen über Kanäle, Leitungen und Gehäusebohrungen, die zu der jeweiligen Schmierstelle führen, insbesondere in Form von Lagern verschiedenster Art.

Das System weist ferner eine Fördereinrichtung 14, eine Filtereinrichtung 16 sowie eine Wärmetauscheinrichtung 18 auf, die über einzelne fluidführende Leitungen 20, 22 miteinander verbunden und im Rahmen einer als Ganzes mit 24 bezeichneten Fluidführung in dieser Reihenfolge entlang einer Strömungsrichtung hintereinander mit Fluid, insbesondere in Form von Schmiermittel oder Kühlschmiermittel, durchströmbar sind. Die Fördereinrichtung 14 weist zwei Fluidpumpen 26 in Form von Konstantpumpen auf, von denen die eine von einem Motor M, wie einem Elektromotor, antreibbar ist und die andere von mechanischen Getriebestufen 28 oder sonstigen Getriebeteilen eines nicht dargestellten Getriebes, wie beispielsweise eines Windkraftgetriebes. Andere Antriebskonzepte sind hier möglich. Die jeweilige Fluidpumpe 26 entnimmt Fluid aus einem Vorratstank 30, der auch einen Ölsumpf aufnehmen kann, und dann aus einer Getriebeölwanne des genannten Getriebes besteht. Es kann aber auch umgekehrt sein. Der Ölsumpf stellt den gesamten Öltank dar und nur eine Teilmenge oder die gesamte Ölmenge ist dann an der tiefsten Stelle im Getriebegehäuse untergebracht. Ausgangsseitig weisen die beiden Fluidpumpen 26 mit vorzugsweise gleichem Fördervolumen ein Vorspannventil 32 auf, insbesondere in Form eines federbelasteten Rückschlagventils, welches in Richtung der Ausgangsseite der jeweils zuordenbaren Fluidpumpe 26 schließt. Die dahingehenden Vorspannventile 32 können beispielsweise einen Vorspanndruck von 0,2 bar aufweisen. In Fluidabgaberichtung hinter den beiden Vorspannventilen 32 gesehen, ist in einem Nebenzweig ein üblicher Drucksensor 34 angeordnet, der den Fluidabgabedruck der Fördereinrichtung 14 überwacht. In einem weiteren Nebenzweig des Versorgungskreises der Fördereinrichtung 14 ist ein Druckbegrenzungsventil 36 geschaltet, insbesondere in Form eines federbelasteten Rückschlagventiles, das in Richtung des Vorratstanks 30 öffnet, beispielsweise bei einem vorgebbaren Druck von 14 bar, wobei das insoweit überschüssige Fluid bei geöffnetem Druckbegrenzungsventil 36 über eine Abgabeleitung 38 in den Vorratstank 30 zurückgeführt wird.

Wie sich weiter aus der Figur 1 ergibt, ist zwischen der Fördereinrichtung 14 und dem jeweiligen Verbraucher V im Hauptstrom 40 der Fluidführung 24 eine Hauptfilterstufe 42 der Filtereinrichtung 16 geschaltet. Ferner ist zur Steuerung eines Nebenstroms 44 der Fluidführung 24 mindestens eine Ventileinrichtung 46 vorgesehen, wobei mit ansteigendem Differenzdruck betreffend die Hauptfilterstufe 42 die jeweilige Ventileinrichtung 46 betätigt, eine vorgebbare Teilmenge des Fluids aus der Fluidführung 24 zum Verbraucher V im Nebenstrom 44 entfernt und zwar vor Eintritt in die Hauptfilterstufe 42.

Die Hauptfilterstufe 42 weist zwei parallel zueinander angeordnete Filtereinheiten 48, 50 auf, von denen die eine Filtereinheit 48 bevorzugt eine größere Filterfeinheit aufweist als die andere Filtereinheit 50. So kann beispielsweise die Filtereinheit 48 eine Filterfeinheit von 5 µm und die andere Filtereinheit 50 eine solche von 10 µm aufweisen. Grundsätzlich besteht aber auch die Möglichkeit, dass beide Filtereinheiten 48, 50 die gleiche Filterfeinheit aufweisen von beispielsweise 10 µm.

Wie sich weiter aus der Figur 1 ergibt, ist parallel zur Hauptfilterstufe 42 eine elektronische Verschmutzungsanzeige GW geschaltet. Die dahingehende elektronische Verschmutzungsanzeige GW ist besonders geeignet für den Einsatz in Niederdruckbereichen, wie hydraulischen Schmiersystemen. Sie nimmt mit zwei Sensoren (nicht dargestellt) den Eingangsdruck am Eingang E ab sowie den Differenzdruck am Eingang E der Hauptfilterstufe 42 sowie an deren Ausgang A, in den die Leitung 10 mit ihrer ausgangsseitigen Sprühdüse 12 mündet. D.h., neben dem Analogausgang für den Differenzdruck gibt es einen zusätzlichen Analogausgang für den Druck vor der Hauptfilterstufe 42.

Der diesbezügliche Sensor-Ausgang 1 der elektronischen Verschmutzungsanzeige GW ist ebenso wie der Sensor-Ausgang 2 des Drucksensors 34 an eine Steuereinrichtung 49, beispielsweise in Form einer üblichen Rechnereinheit, angeschlossen, die ausgangsseitig Steuersignale ST an ein Ventil der Ventileinrichtung 46 weiterleitet, welches entgegen der Wirkung einer Rückstellfeder 51 unter Verwendung eines Betätigungsmagneten 52 magnetbetätigbar ist. Im vorliegenden Fall ist das Ventil der Ventileinrichtung 46 aus einem Stetigventil 54 gebildet, das stufenlos und mithin kontinuierlich je nach dem herrschenden Differenzdruck an der Hauptfilterstufe 42 mehr oder minder im Nebenstrom 44 eine vorgebbare Fluidmenge aus dem Hauptstrom 40 abzweigt und in Richtung des Vorratstankes 30 rückführt. Ist die Hauptfilterstufe 42 im Extremfall von partikulärer Verschmutzung zugesetzt respektive verblockt, wird die gesamte Fluidmenge im Nebenstrom 44 in den Vorratstank 30 zurückgeführt. Dahingehend gelangt das Ventil 54 in seine in Figur 1 gezeigte untere Ventilstellung. Anstelle des Stetigventiles 54 kann auch ein Umschaltventil treten.

Wie sich weiter aus der Figur 1 ergibt, ist parallel zu der elektronischen Verschmutzungsanzeige GW und der Hauptfilterstufe 42 in eine Rückführleitung 56 zum Vorratstank 30 ein weiteres Druckbegrenzungsventil 58 geschaltet, das mit einem vorgebbaren Vorspanndruck von beispielsweise 4 bar versehen öffnet, sobald der Fluiddruck am Eingang E unzulässig hohe Werte einnehmen sollte, was beispielsweise dann der Fall sein kann, wenn die Hauptfilterstufe 42 verblockt ist und das Stetigventil 54 die Fluidführung nicht in den Nebenstrom 44 schaltet. Der angegebene Druckwert von 4 bar ist nur exemplarisch; hier können auch höhere Vorspanndrücke zum Einsatz kommen, beispielsweise im Bereich von 3 bis 10 bar, typisch sind jedoch Werte zwischen 4 bis 6 bar. Das aus einem federbelasteten Rückschlagventil gebildete weitere Druckbegrenzungsventil 58 ist in Richtung des Einganges E federbelastet in seiner Schließstellung gehalten. Insoweit stellt der Eingang E, in Fluidrichtung gesehen hinter dem Stetigventil 54, die Fluidversorgung sicher für die elektronische Verschmutzungsanzeige GW, die Hauptfilterstufe 42 sowie für das weitere Druckbegrenzungsventil 58. Das dahingehende Druckbegrenzungsventil 58 ist optional und dient zur zusätzlichen Absicherung. Falls trotz Ansteuerung des 3/2-Wege-Stetigventiles in Form der Ventileinrichtung 46 es kurzzeitig zu einem höheren Differenzdruck oder einer Druckspitze an der Hauptfilterstufe 42 kommen sollte, kann dieses als Rückschlagventil konzipierte Druckbegrenzungsventil 58 öffnen.

Zur Steuerung des Fluids im Nebenstrom 44 kann in die dahingehende Nebenstromleitung 60 ein zusätzliches Ventil 62 geschaltet sein, das ausgangsseitig in die Rückführleitung 56 ausmündet. Im vorliegenden Fall ist das zusätzliche Ventil 62 aus einem einstellbaren Drosselventil gebildet; es können hier aber auch andere Ventile zum Einsatz kommen, wie beispielsweise ein weiteres Stetigventil oder ein Sperrventil, wie beispielsweise ein elektromagnetisch betätigbares 2/2-Wege-Ventil. Des Weiteren kann das Ventil 62 auch aus einer Messblende mit einem Differenzdrucksensor GW bestehen, auch in Reihe geschaltet. Zur Überwachung des Fluids im Nebenstrom 44 dient eine weitere elektronische Verschmutzungsanzeige GW1, die parallel zum zusätzlichen Ventil 62 in die Nebenstromleitung 60 geschaltet ist und die ausgangsseitig wiederum in die Rückführleitung 56 zum Vorratstank 30 hin ausmündet. Die weitere elektronische Verschmutzungsanzeige GW1 ist wie die Anzeige GW ausgebildet, so dass insoweit um Wiederholungen zu vermeiden auf die dahingehenden Ausführungen verwiesen wird. Jedenfalls weist die weitere elektronische Verschmutzungsanzeige GW1 einen Sensorausgang 3 auf, der als Sensordateneingang 3 an die Steuereinrichtung 49 angeschlossen ist, die gegebenenfalls über einen weiteren Steuerausgang (nicht dargestellt) ein elektromagnetisch ansteuerbares Ventil als zusätzliches Ventil 62 der Ventileinrichtung 46 im Bedarfsfall ansteuern würde.

Mit der gezeigten Schmiermittelversorgung nach der Figur 1 ist im Bedarfsfall eine Reduzierung des Volumenstroms durch die Hauptfilterstufe 42 im Rahmen einer Schmierung für den jeweiligen Verbraucher V erreicht. Demgemäß wird die Hauptfilterstufe 42 nur noch mit der notwendigen Menge von Volumenstrom für die Schmierung durchströmt und nicht mehr mit dem gesamten Fluidvolumenstrom, der durch die Fördereinrichtung 14 bereitgestellt ist. Dadurch kommt es zu einem geringeren Druckverlust an der Hauptfilterstufe 42 mit den Vorteilen, dass die Baugröße für die Hauptfilterstufe verringert werden kann und dass der Bedarf an Bypass-Volumenstrom im Nebenstrom 44 kleiner wird, indem eben der Bypass-Volumenstrom an der Schmierung für den Verbraucher vorbei im Nebenstrom 44 direkt in den Vorratstank 30 gelangt. Dergestalt ist in jedem Fall auch ein Partikeleintrag in den Verbraucher V, beispielsweise in Form eines Windkraftgetriebes, durch den Bypass-Volumenstrom vermieden.

Wie weiter die Figur 1 zeigt, ist auf der Ausgangsseite der Fördereinrichtung 14 eine Vorfilterstufe 64 angeordnet und beispielsweise mit einer Filterfeinheit von 50 *µ*m versehen. Dabei ist in besonders vorteilhafter Weise weiter vorgesehen, dass die Wärmetauscheinrichtung 18, regelmäßig in Form eines Kühlers, zwischen der Vorfilterstufe 64 und der Hauptfilterstufe 42 angeordnet ist, wobei im vorliegenden Fall zwischen der Wärmetauscheinrichtung 18 und der Hauptfilterstufe 42 noch die Ventileinrichtung 46 mit ihrem jeweiligen Ventil vorgesehen ist. Dahingehend ist in jedem Fall sichergestellt, dass die Wärmetauscheinrichtung 18 keinen relevanten Eintrag mit Partikelverschmutzung erfährt. Der dahingehende Wärmetauschkreis ist im Bypass über ein zusätzliches Bypassventil oder Druckbegrenzungsventil 66 abgesichert sowie optional über ein Umgehungsventil 68, das eine Fluidversorgung für die Hauptfilterstufe 42 sicherstellt, sofern aus welchen Gründen auch immer, die Wärmetauscheinrichtung 18 nicht mehr durchströmbar sein sollte. Das Freigabe- oder Umgehungsventil 68 kann auch aus einem thermisch gesteuerten Ventil, wie einem Thermo-Bypassventil, bestehen.

Mittels der Steuereinrichtung 49 lässt sich darüber hinaus eine Volumenstromaufteilung in Haupt- und Nebenstrom 40 bzw. 44 nach mindestens einer vorgebbaren Volumenstrom-Temperatur-Kennlinie vornehmen, die sicherstellt, dass bei allen relevanten Betriebstemperaturen ein ausreichender Schmier-Volumenstrom zum Verbraucher V gelangt und nur die nicht benötigte Menge als Bypassvolumenstrom über den Nebenstrom 44 in den Ölsumpf (Vorratstank 30) abgeführt wird. Da die Viskosität des fluiden Betriebsmediums mit von der Temperatur abhängt, lässt sich insoweit auch im Rahmen der Steuerung die Viskosität mit berücksichtigen.

Der Vollständigkeit halber sei erwähnt, dass auch im Nebenstrom 44 eine zusätzliche Filtereinrichtung (nicht dargestellt) eingebracht sein kann, um auch insoweit zu höheren Reinheitsklassen für das Betriebsfluid zu gelangen. Des Weiteren kann am Ausgang A in Fluidrichtung gesehen hinter der Hauptfilterstufe 42 ein sogenanntes Spülventil (nicht dargestellt) vorhanden sein, welches es ermöglicht, aus der Fluidführung 24 in Richtung des Verbraucher V eine vorgebbare Fluidmenge im Bedarfsfall zum Tank 30 auszuschleusen, was die Möglichkeit eröffnet einen möglicherweise unbeabsichtigt auftretenden Verschmutzungs- oder Partikeleintrag aus der Fluidführung 24 respektive aus dem Fluidkreis abzuführen, bevor der jeweilige Verbraucher V erreicht ist. Ein dahingehend zusätzlicher Verschmutzungs- oder Partikeleintrag entsteht regelmäßig im Rahmen von Neuinstallationen und/oder Wartungsarbeiten an der Fluidversorgung als Ganzes.

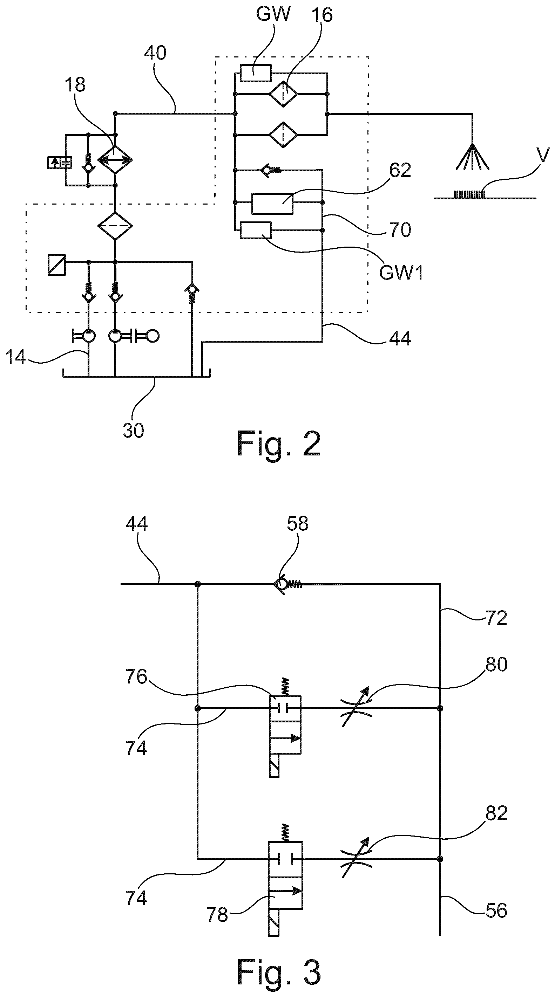

Die folgenden Ausführungsformen nach den Figuren 2 und 3 werden nur noch insofern erläutert als sie sich wesentlich von dem vorangehenden Ausführungsbeispiel nach der Figur 1 unterscheiden. Bei der Ausführungsform nach der Figur 2 ist die Ventileinrichtung 46 im Hauptstrom 40 entfallen und das hierfür zum Einsatz kommende, zusätzliche Ventil 62 dient nunmehr als Teil der Ventileinrichtung 46 dazu, den Nebenstrom 44 in Richtung der Rückführleitung 56 mit dem Vorratstank 30 entsprechend anzusteuern.

Für den Schaltplan nach der Figur 3 gilt, dass die Ventillösung nach der Figur 3 an die Stelle des Funktionsblockes 70 in der Figur 2 treten soll. Der dahingehende Ventilblock 72 weist neben dem weiteren Druckbegrenzungsventil 58 und in Parallelanordnung zu diesem zwei weitere Fluidpfade74 auf, in die jeweils ein Schaltventil 76, 78 sowie in Strömungsrichtung gesehen nachfolgend ein einstellbares Drosselventil 80 bzw. 82 angeordnet sind. Die beiden Schaltventile 76, 78 bestehen aus baugleichen, elektromagnetisch betätigbaren 2/2-Wege-Sperrventilen, die in Figur 3 in ihrer sperrenden Stellung gezeigt sind. Ist das erste und das zweite Schaltventil 76 bzw. 78 in der gezeigten Sperrstellung, ist in der Rückführleitung 56 zum Vorratstank 30 der Volumenstrom Q = 0. Ist in einer zweiten Betätigungsstellung das erste Schaltventil 76 in der geschlossenen Stellung und das zweite Schaltventil 78 geöffnet, ergibt sich ein Volumenstrom Q₂. In der dritten Betätigungsstellung soll das erste Schaltventil 76 geöffnet sein und das zweite Schaltventil 78 geschlossen, so dass sich ein Volumenstrom Q₃ ergibt. In der letztmöglichen Betätigungsstellung ist sowohl das Schaltventil 76 als auch das Schaltventil 78 geöffnet, was einen Volumenstrom Q₄ ergibt, wobei der sich dabei jeweils einstellende Volumenstrom in den vorstehend genannten Betätigungsstellungen maßgebend von den Drosselventilen 80, 82 mitbestimmt ist. Bei entsprechender Ventileinstellung lässt sich dergestalt erreichen, dass für eine stufenweise Einstellung der Fluidmenge im Nebenstrom 44, der Zusammenhang Q₄ > Q₃ > Q₂ gilt. Für eine weitere Feinabstufung ist es auch möglich mehr als nur zwei Schaltventile nebst Drosselventilen in Parallelanordnung innerhalb der Nebenstromführung einzusetzen.

Mit der aufgezeigten Systemlösung ist es jedenfalls möglich, bei auftretenden Druckdifferenzen Steuersignale über die Steuereinrichtung 49 derart an die Ventile der Ventileinrichtung 46 auszugeben, dass ein Bypass-Volumenstrom respektive Nebenstrom 44 definiert vorgegeben werden kann, um dergestalt die ausreichende Versorgung des jeweiligen Verbrauchers V sicherzustellen und einen Betrieb mit zu stark verschmutzten Filtereinheiten 48, 50 respektive Filterelementen sowie zu hohen Volumenströmen bei kaltem, hochviskosem Betriebsfluid zu vermeiden. Dies hat so keine Entsprechung im Stand der Technik.

## Patentansprüche

1. System zur Fluidversorgung mindestens eines Verbrauchers (V), insbesondere zur Schmiermittelversorgung von Verbrauchern (V), wie Lagerstellen in Getrieben von Windkraftanlagen einschließlich Gleitlagern, zumindest bestehend aus einer
- Fördereinrichtung (14),
- Filtereinrichtung (16), und
- Wärmetauscheinrichtung (18),
die über fluidführende Leitungen (20, 22) miteinander verbunden und im Rahmen einer Fluidführung (24) entlang einer Strömungsrichtung mit Fluid durchströmbar sind, **dadurch gekennzeichnet, dass** zwischen der Fördereinrichtung (14) und dem jeweiligen Verbraucher (V) im Hauptstrom (40) einer Fluidführung (24) eine Hauptfilterstufe (42) der Filtereinrichtung (16) geschaltet ist, dass zur Steuerung eines Nebenstroms (44) der Fluidführung (24) mindestens eine Ventileinrichtung (46) vorgesehen ist, und dass mit ansteigendem Differenzdruck betreffend die Hauptfilterstufe (42) die jeweilige Ventileinrichtung (46) betätigt, eine vorgebbare Teilmenge des Fluids aus der Fluidführung (24) zum Verbraucher (V) entfernt.

2. System nach Anspruch 1, **dadurch gekennzeichnet, dass** die Ventileinrichtung mindestens
- ein Stetigventil (54),
- ein Umschaltventil,
- ein Drosselventil (62), oder
- eine Ventilbaugruppe (72) mit mindestens zwei Schaltventilen (76, 78) und zwei Drosselventilen (80, 82) aufweist.

3. System nach Anspruch 1 oder 2, **dadurch gekennzeichnet, dass** die Hauptfilterstufe (42) mindestens zwei parallel zueinander angeordnete Filtereinheiten (48, 50) aufweist, von denen mindestens eine Filtereinheit (48) optional eine größere Filterfeinheit aufweist als die jeweils andere Filtereinheit (50).

4. System nach einem der vorstehenden Ansprüche, **dadurch gekennzeichnet, dass** parallel zur Hauptfilterstufe (42) und/oder parallel zur Ventileinrichtung in die Fluidführung eine elektronische Verschmutzungsanzeige (GW) geschaltet ist.

5. System nach einem der vorstehenden Ansprüche, **dadurch gekennzeichnet, dass** die elektronische Verschmutzungsanzeige (GW) mit zwei Sensoren den Eingangsdruck sowie den Differenzdruck derart abnimmt, dass neben dem Analogausgang für den Differenzdruck es einen zusätzlichen Analogausgang für den Druck vor der jeweiligen Filtereinheit (48, 50) gibt.

6. System nach einem der vorstehenden Ansprüche, **dadurch gekennzeichnet, dass** zwischen der Fördereinrichtung (14) und der Hauptfilterstufe (42) eine Vorfilterstufe (64) geschaltet ist.

7. System nach einem der vorstehenden Ansprüche, **dadurch gekennzeichnet, dass** die Filterfeinheit der Vorfilterstufe (64) geringer ist als die der Hauptfilterstufe (42).

8. System nach einem der vorstehenden Ansprüche, **dadurch gekennzeichnet, dass** die Wärmetauscheinrichtung (18) mit ihrem Kühler im Bypass ein Thermo-Bypassventil (68) aufweist sowie vorzugsweise ein federbelastetes Umgehungsventil (66), das in Richtung der Vorfilterstufe (64) schließt.

9. System nach einem der vorstehenden Ansprüche, **dadurch gekennzeichnet, dass** die Fördereinrichtung (14) mindestens zwei Fluidpumpen (26) aufweist, von denen eine motorbetrieben (M) und die andere mechanisch von einer Getriebestufe (28) antreibbar ist.

10. System zur Fluidversorgung mindestens eines Verbrauchers (V), insbesondere zur Schmiermittelversorgung von Verbrauchern (V), wie Lagerstellen in Getrieben von Windkraftanlagen einschließlich Gleitlagern, zumindest bestehend aus einer
- Fördereinrichtung (14),
- Filtereinrichtung (16), und
- Wärmetauscheinrichtung (18),
die über fluidführende Leitungen (20, 22) miteinander verbunden und im Rahmen einer Fluidführung (24) entlang einer Strömungsrichtung mit Fluid durchströmbar sind, **dadurch gekennzeichnet, dass** zwischen der Vorfilterstufe (64) und der Hauptfilterstufe (42) die Wärmetauscheinrichtung (18) geschaltet ist.
